**Europäisches Patentamt**

**European Patent Office**

**Office européen des brevets**

(11) Veröffentlichungsnummer: **0 062 089**
**B1**

(12) **EUROPÄISCHE PATENTSCHRIFT**

(45) Veröffentlichungstag der Patentschrift:
17.09.86

(51) Int. Cl.⁴: **B 60 P 1/04,** B 60 P 1/28

(21) Anmeldenummer: **81102951.1**

(22) Anmeldetag: **16.04.81**

(54) **Kugelkipplager für Zwei- oder Dreiseitenkipper.**

(43) Veröffentlichungstag der Anmeldung:
**13.10.82 Patentblatt 82/41**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**CH - A - 249 694**
**DE - U - 1 783 579**
**FR - A - 458 112**
**US - A - 2 513 658**

(73) Patentinhaber: **Karl Hildebrand GmbH & Co. KG,
Bessemerstrasse 9, D-4006 Erkrath (DE)**

(72) Erfinder: **Hildebrand, Karl, Kamper Weg 184,
D-4000 Düsseldorf-Gerresheim (DE)**

(74) Vertreter: **Weber, Otto Ernst, Dipl.-Phys.,
Hofbrunnstrasse 36, D-8000 München 71 (DE)**

ACTORUM AG

## Beschreibung

Die Erfindung betrifft ein Kugelkipplager für Zwei- oder Dreiseitenkipper nach dem Oberbegriff des Patentanspruches 1.

Ein Kugelkipplager dieser Art ist aus der CH-A-249 694 bekannt. Das in dieser Druckschrift beschriebene Lager weist ein Ringsegment auf, welches über Schrauben an der Lagerpfanne befestigt ist. Das Ringsegment übergreift die in der Lagerpfanne aufgenommene Kugel in ihrem oberen, freien Bereich und verhindert, dass die Kugel beim Angreifen einer Zugkraft aus dem Lager heraustreten kann.

An der bekannten Vorrichtung ist nachteilig, dass zwischen der Anlagefläche des Ringsegmentes und der Kugeloberfläche immer ein Lagerspiel vorhanden sein muss. Das Ringsegment kann nicht spielfrei gegen die Kugeloberfläche vorgespannt sein, da in diesem Fall Kippbewegungen nicht mehr durchführbar wären. Mithin muss zur Gewährleistung der Funktion der Vorrichtung ein Lagerspiel vorhanden sein, mit der Folge, dass im Betrieb zwischen der Kugel und dem Ringsegment Relativbewegungen auftreten. Dadurch wiederum entsteht im Lager erhöhter Abrieb, so dass das Lager infolge der damit bedingten Verschleisserscheinungen nur eine geringe Lebensdauer aufweist. Um die Lebensdauer etwas zu verlängern, kann das Lager nach einer bestimmten Betriebsdauer auseinandergenommen werden, und es können verschlissene Teile ausgetauscht werden. Damit ist jedoch ein kostspieliger Wartungsaufwand verbunden, mit dem zwar erreicht wird, dass zunächst die Funktionstüchtigkeit des Lagers wieder hergestellt wird, der aber generell als Nachteil anzusehen ist.

Daneben ist es bei der bekannten Vorrichtung notwendig, in der freien Kugeloberfläche einen zusätzlichen Zapfen einzubringen, so dass die Führung des Kugelkipplagers während der Kippbewegung gewährleistet ist. Dieser Zapfen stellt einen zusätzlichen, vermeidbaren Aufwand dar. Schliesslich kommt es durch das notwendige Spiel im Kugelkipplager zwischen der Kugel und dem Ringsegment einerseits und zwischen der kreisförmigen Aussparung im oberen Rand der Kugelschale und dem darin geführten Zapfen andererseits zu einer Lärmbelästigung, die vermeidbar ist.

Der Erfindung liegt die Aufgabe zugrunde, ein Kugellager der eingangs genannten Art zu schaffen, welches weitgehend wartungsfrei ist und bei welchem zugleich schädliche Auswirkungen von Verschleisserscheinungen fast vollständig vermieden werden.

Diese Aufgabe wird durch die im Kennzeichnungsteil des Patentanspruches 1 angegebenen Merkmale gelöst.

Nach dem Grundgedanken der Erfindung ist vorgesehen, dass im Abstand zur Kugel in der mit der Lagerpfanne verbundenen Halterung eine Achse vorgesehen ist, um welche das Sperrelement verschwenkbar gelagert ist. Das Sperrelement weist eine mit der Kugel ständig in Berührung stehende Anlagefläche auf und ist mit einer Kraft, die an dem der Anlagefläche abgewandten Abschnitt angreift, gegen die freie Oberfläche der Kugel unter Vorspannung anlegbar.

Ein besonderer Vorteil der Vorrichtung nach der Erfindung ist darin zu sehen, dass es gelingt, ein schädliches Lagerspiel fast vollkommen auszuschalten. Dabei bleibt das erfindungsgemässe Kugelkipplager trotzdem leichtgängig, und sozusagen als positive Begleiterscheinung wird gleichzeitig eine unerwünschte Lärmbelästigung vermieden. Als weiterer Vorteil des Kugelkipplagers nach der Erfindung ist anzuführen, dass sich die Arretiereinrichtung bei einem Verschleiss der Anlagefläche des Sperrelementes selbsttätig nachstellt. Nach einem Verschleiss der Anlagefläche liegt das Sperrelement mit nahezu der gleichen Vorspannung gegen die Kugeloberfläche an und sichert die Kugel mit einem sehr hohen Mass gegen ein Heraustreten aus der Pfanne.

In einem bevorzugten Ausführungsbeispiel ist vorgesehen, dass die Halterung aus zwei im Abstand angeordneten Scheiben besteht und dass das Sperrelement zwischen den Scheiben angeordnet ist. Mit dieser Anordnung wird die Führung des Sperrelementes bei einer Schwenkbewegung in vorteilhafter Weise gewährleistet.

In einer weiteren besonderen Ausgestaltung des erfindungsgemässen Kugelkipplagers ist vorgesehen, dass das Sperrelement an einem von der Anlagefläche nach aussen abstehenden Abschnitt einen sich nach entgegengesetzten Seiten der Pfanne erstreckenden T-förmigen Vorsprung aufweist, durch den mittels mindestens eines schwenkbaren Stabes die Verriegelungsstellung zwischen dem Sperrelement und der Kugel lösbar ist. Diese Einrichtung ermöglicht eine einfache Entriegelung des erfindungsgemässen Kugelkipplagers.

Um die Kraft aufzubringen, die notwendig ist, um die Kugel mit dem Sperrelement zu verriegeln, gibt es mehrere gleichwertige Möglichkeiten.

Eine Art, das Sperrelement gegen die Kugel vorzuspannen besteht darin, die Achse im Sperrelement derart exzentrisch anzuordnen, dass das Sperrelement durch seine exzentrische Gewichtsverteilung gegenüber der Achse an die Kugel angedrückt wird und diese somit arretiert.

Eine weitere Möglichkeit sicherzustellen, dass das Sperrelement die Kugel betriebssicher arretiert, besteht darin, das Sperrelement an seinem von der Anlagefläche abgewandten Abschnitt, an dem die Kraft angreift, mit nach entgegengesetzten Seiten abstehenden Federaufhängungen auszubilden, weiterhin im unteren Teil der Halterung nach entgegengesetzten Seiten abstehende Zapfen vorzusehen und symmetrisch zum Sperrelement jeweils zwischen den Federaufhängungen und den Zapfen Federn zur Kraftaufbringung anzuordnen. Diese Vorrichtung weist eine Besonderheit dahingehend auf, dass zwei parallel arbeitende Federn vorgesehen sind, die das Sperrelement gegen die Kugel andrücken. Sollte eine Feder durch Bruch oder durch sonstiges Versagen ausfallen, reicht die aus der zweiten Feder resultierende Kraft, um die Kugel ausreichend in ihrer Lage zu arretieren.

Die Erfindung wird nachfolgend beispielsweise anhand der Zeichnung beschrieben; es zeigen:

Fig. 1 eine Seitenansicht des Kugelkipplagers mit eingebauter Kugel;

Fig. 2 eine Vorderansicht ohne Kugel;

Fig. 3 schematisch die Ausbildung der Kugel mit Zapfen;

Fig. 4 eine schematische Seitenansicht des Sperrelementes;

Fig. 5 eine Draufsicht ohne Kugel sowie

Fig. 6 eine Draufsicht einer zweiten Ausführungsform.

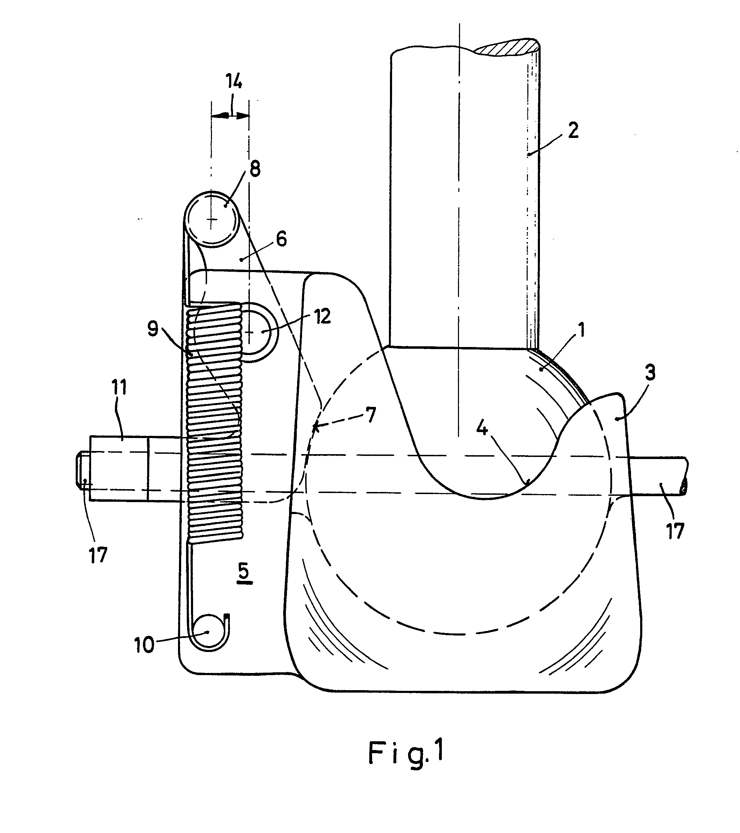

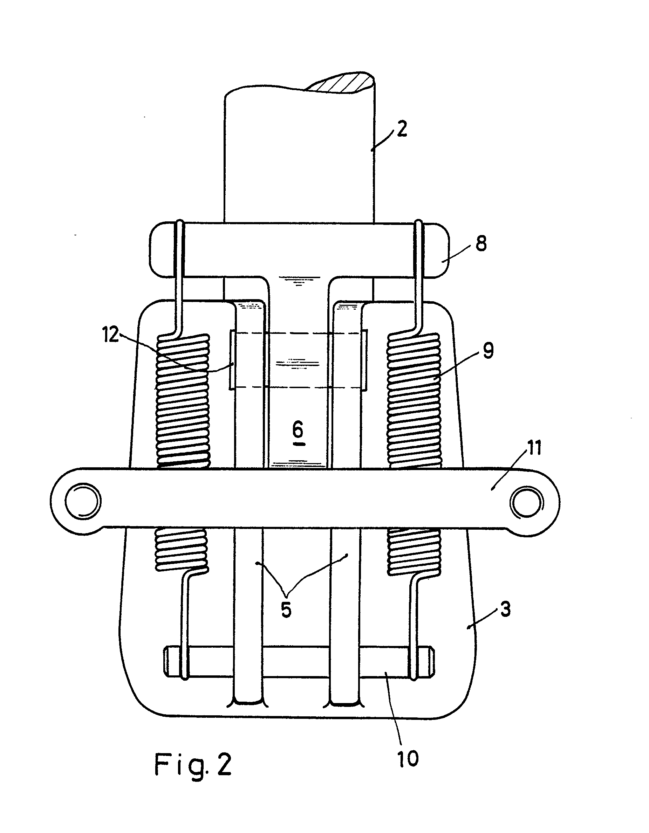

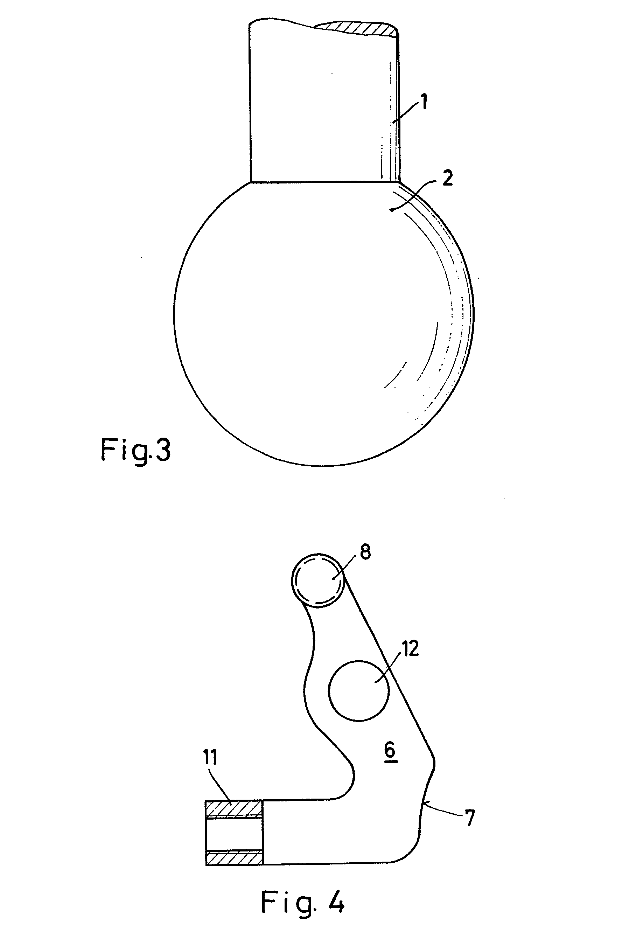

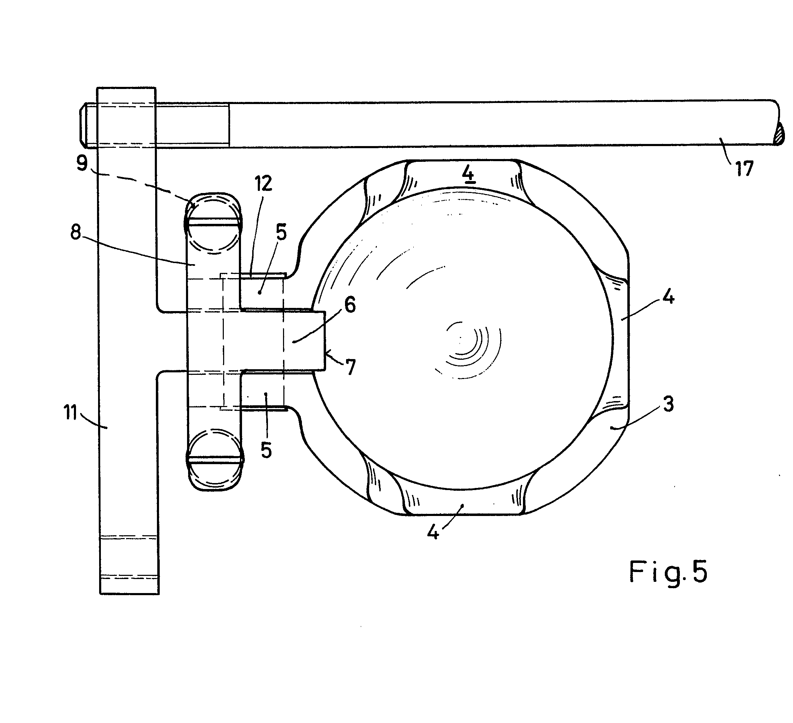

Bei der Ausführungsform nach den Figuren 1 bis 5 ist die Kugel mit 1 und der Kugelzapfen mit 2 bezeichnet. Die Kugel 1 ist abgestützt in einer Pfanne oder Schale 3, die im unteren Teil halbkreisförmig ausgebildet ist und nach oben Verlängerungen aufweist, die in ihrem oberen Rand halbkreisförmige Aussparungen 4 aufweist, die zur seitlichen Führung des Kugelzapfens bei Bewegungen nach drei Richtungen bilden. Die Schale 3 weist auf einer Seite eine nach aussen vorspringende Halterung 5 auf, die aus zwei mit Abstand angeordneten Scheiben besteht, in deren oberem Teil ein Sperrelement 6 an einer Achse 12 kippbar gelagert ist. Dieses Sperrelement 6 weist eine Anlagefläche 7 auf, die in die Schale 3 hineinreicht. Das Sperrelement 6 weist im oberen Teil seitlich herausstehende T-förmige Federaufhängungen 8 auf, die vor der Drehachse 12 im Abstand 14 angeordnet sind. Wie die Darstellung in Fig. 2 erkennen lässt sind die Federn 9 die das Sperrelement 6 gegen die Kugel 1 pressen, symmetrisch zum Sperrelement 6 angeordnet. Die unteren Enden der Feder 9 sind im unteren Teil der Halterung 5 an Zapfen 10 gelagert. Sie sind derart eingestellt, dass das Sperrelement an der Kugel 1 mit dem erforderlichen Anpressdruck anliegt.

Das Sperrelement 6 weist auf der Aussenseite einen sich nach beiden Seiten erstreckenden T-förmigen Vorsprung 11 auf, der in horizontaler Lage angeordnet ist. Der Vorsprung 11 weist einen herausnehmbaren Stab 17 auf, durch den durch Herunterdrücken die Sperrung an der Kugel lösbar ist, so dass die Kugel herausgenommen werden kann. Die Kippachse 12 des Sperrelementes 6 ist derart angeordnet, dass durch die Anordnung des T-förmigen Vorsprunges 11 ein Übergewicht auf der äusseren Seite der Kippachse 12 entsteht, so dass auch ohne Federwirkung das Sperrelement 6 gegen die Kugel gepresst wird, so dass eine automatische Arretierung der Kugel 1 in der Schale 3 entsteht, die ein Herausheben der Kugel unmöglich macht.

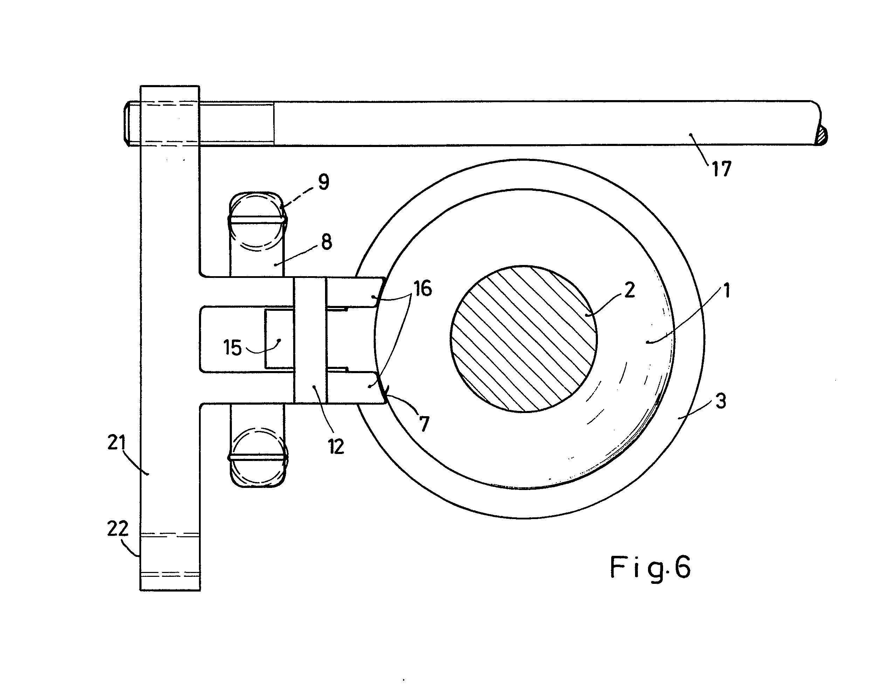

Fig. 6 zeigt eine zweite Ausführungsform, bei der die Halterung 15 aus einer Scheibe besteht. Seitlich und symmetrisch sind zwei Klemmelemente 16 vorgesehen, die auf einer Kippachse 12 gelagert sind. Die Klemmelemente 16 ragen in die Schale des Kugelkipplagers hinein und dienen auf diese Weise zur Arretierung der Kugel 1. An den äusseren Enden der Klemmelemente 16 ist ein stabförmiger Vorsprung 21 angeordnet, der an seinen Enden Öffnungen 22 zum Einführen der Stäbe 17 aufweist mit denen die Arretierung der Kugel 1 gelöst werden kann. Die Arme 8 dienen wiederum zur Anordnung von Spiralfedern 9, die den Anpressdruck der Sperrelemente 16 zum Anliegen an die Kugel 1 erzeugen.

**Patentansprüche**

1. Kugelkipplager für Zwei- oder Dreiseitenkipper mit einer Kugel (1), an welcher in der Horizontallage des Kipperaufbaues ein in vertikaler Richtung weisender Zapfen (2) angeordnet ist, mit einer etwa halbkugelförmigen Pfanne (3), in welcher die Kugel (1) kippbar gelagert ist und welche in ihrem oberen Rand wenigstens eine in etwa halbkreisförmige Abstützaussparung (4) aufweist, mit einer an einer Seite der Pfanne (3) angeordneten, nach aussen vorspringenden Halterung (5; 15) und mit mindestens einem am oberen Teil der Halterung (5; 15) angeordneten Sperrelement (6; 16), welches die Kugel (1) in ihrem freien Bereich teilweise übergreift, dadurch gekennzeichnet, dass im Abstand zur Kugel (1) in der Halterung (5; 15) eine Achse (12) vorgesehen ist, dass das Sperrelement (6; 16) um die Achse (12) verschwenkbar gelagert ist, dass das Sperrelement (6; 16) wenigstens eine Anlagefläche (7) aufweist und dass das Sperrelement (6; 16) mit einer an dem der Anlagefläche (7) abgewandten Abschnitt angreifenden Kraft (9) gegen die freie Oberfläche der Kugel (1) unter Vorspannung anlegbar ist.

2. Kugelkipplager nach Anspruch 1, dadurch gekennzeichnet, dass die Halterung (5) aus zwei im Abstand angeordneten Scheiben besteht und dass das Sperrelement (6 ) zwischen den Scheiben angeordnet ist.

3. Kugelkipplager nach Anspruch 1 oder 2, dadurch gekennzeichnet, dass das Sperrelement (6; 16) an einem von der Anlagefläche (7) nach aussen abstehenden Abschnitt einen sich nach entgegengesetzten Seiten der Pfanne (3) erstreckenden T-förmigen Vorsprung (11) aufweist, durch den mittels mindestens eines schwenkbaren Stabes (17) die Sperrstellung lösbar ist, so dass die Kugel (1) herausnehmbar ist.

4. Kugelkipplager nach einem der Ansprüche 1 bis 3, dadurch gekennzeichnet, dass die Achse (12) im Sperrelement (6; 16) derart exzentrisch angeordnet ist, dass das Sperrelement (6; 16) durch seine exzentrische Gewichtsverteilung gegenüber der Achse (12) gegen die Kugel (1) abgestützt ist und diese arretiert.

5. Kugelkipplager nach einem der Ansprüche 1 bis 3, dadurch gekennzeichnet, dass das Sperrelement (6; 16) an seinem von der Anlagefläche (7) abgewandten Abschnitt, an dem die Kraft (9) angreift, nach entgegengesetzten Seiten abstehende Federaufhängungen (8) aufweist, dass im unteren Teil der Halterung (5, 15) nach entgegengesetzten Seiten abstehende Zapfen (10) vorgesehen sind und dass symmetrisch zum Sperrelement (6; 16) jeweils zwischen den Federaufhängungen (8) und den Zapfen (10) Federn zur Aufbringung der Kraft (9) angeordnet sind.

## Claims

1. Rocking ball bearing for two or three-sided dumpers with a ball (1) on which, in the horizontal position of the dumping body is arranged a vertically directed pin (2), with an approximately hemispherical cup (3) in which the ball (1) is tiltably mounted and having in its upper edge at least one approximately semicircular support recess (4), with an outwardly projecting mounting support (5, 15) arranged on one side of the cup (3) and with at least one blocking member (6, 16) arranged on the upper part of the mounting support (5, 15) and which partly engages over ball (1) in its free zone, characterized in that a spindle (12) is provided in mounting support (5, 15) at a distance from ball (1), that the blocking member (6, 16) is mounted so as to pivot about spindle (12), that the blocking member (6, 16) has at least one bearing face (7) and that the blocking member (6, 16) can be applied under prestress against the free surface of ball (1) by a force (9) acting on the portion remote from the bearing surface (7).

2. Rocking ball bearing according to claim 1, characterized in that the mounting support (5) comprises two spaced disks and that the blocking member (6) is arranged between the disks.

3. Rocking ball bearing according to claim 1 or 2, characterized in that on a portion projecting outwards from the bearing surface (6), blocking member (6, 16) has a T-shaped projection (11) extending to opposite sides of cup (3) which, by means of at least one pivotable rod (7), the blocking position can be released enabling the ball (1) to be removed.

4. Rocking ball bearing according to one of the claims 1 to 3, characterized in that the spindle (12) is eccentrically arranged in blocking member (6, 16) in such a way that the latter is supported against ball (1) by its eccentric weight distribution with respect to spindle (12) and locks said ball.

5. Rocking ball bearing according to one of the claims 1 to 3, characterized in that on its portion remote from the bearing surface (7) and on which the force (9) acts, blocking member (6, 16) has spring suspensions (8) projecting in opposite directions, that in the lower part of mounting support (5, 15) are provided pins (10) projecting to opposite sides and that symmetrically with respect to the blocking member (6, 16) are arranged between the spring suspensions (8) and the pins (10) springs for applying the force (9).

## Revendications

1. Appui sphérique oscillant pour matériel basculant bilatéralement ou trilatéralement, comportant une sphère (1) sur laquelle est monté un pivot (2) orienté en direction verticale dans la position horizontale du matériel basculant, comportant également un coussinet (3) en forme de cuve à peu près semi-sphérique, dans laquelle la sphère (1) est disposée de façon à pouvoir avoir un mouvement de basculement et qui présente à son bord supérieur au moins une cavité d'appui (4) de forme à peu près demi-circulaire, comportant également un dispositif de fixation (5, 15) monté sur un côté du coussinet (3) en forme de cuve et saillant vers l'extérieur, et comportant également au moins un élément de blocage (6, 16) monté à la partie supérieure du dispositif de fixation (5, 15) et qui vient recouvrir partiellement la sphère (1) dans sa zone libre, appui sphérique oscillant caractérisé en ce qu'il est prévu un axe (12) à une certaine distance de la sphère (1) dans le dispositif de fixation (5, 15), en ce que l'élément de blocage (6, 16) est monté pivotant autour de l'axe (12), en ce que l'élément de blocage (6, 16) présente au moins une surface d'appui (7) et en ce que l'élément de blocage (6, 16) peut, sous l'effet d'une force (9) agissant sur son tronçon situé à l'opppposé de la surface d'appui (7), s'appliquer sous précontrainte contre la surface libre de la sphère (1).

2. Appui sphérique oscillant selon la revendication 1, caractérisé en ce que le dispositif de fixation (5) est constitué par deux plaques disposées à distance l'une de l'autre, et en ce que l'élément de blocage (6) est monté entre ces plaques.

3. Appui sphérique oscillant selon la revendication 1 ou 2, caractérisé en ce que l'élément de blocage (6, 16), sur un tronçon s'écartant vers l'extérieur, à distance de la surface d'appui (7), est pourvu d'une saillie (11) en forme de T s'étendant vers les côtés opposés du coussinet (3) en forme de cuve, et grâce à laquelle, au moyen d'au moins une barre pivotante (17), on peut libérer la position de blocage de la sphère (1) de manière à lui permettre d'être retirée.

4. Appui sphérique oscillant selon l'une des revendications 1 à 3, caractérisé en ce que l'axe (12) est disposé excentriquement dans l'élément de blocage (6, 16) de telle manière, que l'élément de blocage (6, 16), grâce à sa répartition de poids excentrée, par rapport à l'axe (12), s'appuie contre la sphère (1) et bloque celle-ci.

5. Appui sphérique oscillant selon l'une des revendications 1 à 3, caractérisé en ce que l'élément de blocage (6, 16), sur son tronçon situé à l'opposé de la surface d'appui (7) et sur lequel agit la force (9), comporte des suspensions élastiques (8) faisant saillie vers les côtés opposés, en ce que, dans la partie inférieure du dispositif de fixation (5, 15), des pivots (10) sont prévus en faisant saillie vers les côtés opposés, et en ce que, symétriquement par rapport à l'élément de blocage (6, 16), des ressorts pour l'application de la force (9) sont disposés chaque fois entre les suspensions élastiques (8) et les pivots (10).

Fig.1

Fig. 2

Fig. 3

Fig. 4

Fig. 5

0 062 089

Fig.6